# EUROPÄISCHE PATENTSCHRIFT

(11) **EP 3 044 021 B1**
(45) Veröffentlichungstag und Bekanntmachung des Hinweises auf die Patenterteilung: **28.03.2018**
(21) Anmeldenummer: 14776598.6
(22) Anmeldetag: 02.09.2014
(51) Int. Cl.: B60J 10/265, B29C 47/04, B29C 45/16

(54) **PROFILSTRANG, INSBESONDERE FÜR EIN KRAFTFAHRZEUG, SOWIE HERSTELLUNGSVERFAHREN HIERFÜR**
PROFILED SECTION, ESPECIALLY FOR A MOTOR VEHICLE, AND METHOD FOR THE PRODUCTION THEREOF
ÉLÉMENT PROFILÉ, EN PARTICULIER POUR UN VÉHICULE À MOTEUR, ET SON PROCÉDÉ DE PRODUCTION

(30) Priorität: 02.09.2013 DE 102013109567
(43) Veröffentlichungstag der Anmeldung: 20.07.2016
(73) Patentinhaber: Cooper Standard GmbH, 88131 Lindau (DE)
(72) Erfinder: SCHRAMM, Dominik, 88142 Wasserburg/Bodensee (DE); REUPERT, Dirk, 88131 Lindau/Bodensee (DE); FRITZSCHE, Ronald, 88149 Nonnenhorn (DE)
(74) Vertreter: Flügel Preissner Schober Seidel
(86) Internationale Anmeldenummer: PCT/EP2014/068638
(87) Internationale Veröffentlichungsnummer: WO 2015/028686

(56) Entgegenhaltungen:
- DE-A1- 3 107 889
- US-A1- 2012 028 047

## Beschreibung

Die Erfindung betrifft einen Profilstrang, insbesondere für ein Kraftfahrzeug. Zudem betrifft die Erfindung ein Herstellungsverfahren für einen derartigen Profilstrang.

Profilstränge werden beispielsweise im Innenraum von Kraftfahrzeugen als Kantenschutzprofil oder zum Überdecken des Übergangs zum Dachhimmel verwendet. Weitere Einsatzorte sind die A-, B- und C-Säule der Karosserie.

Der Profilstrang kann auch zum Abdichten eines Fensterschachts oder einer Fensterscheibe sowie als Fensterführung für eine bewegbare Fensterscheibe verwendet werden. Der Profilstrang wird in diesem Fall als Dichtungsstrang oder Dichtungsprofil bezeichnet.

Das Aussehen des Profilstranges spielt für das Design des Kraftfahrzeugs eine wichtige Rolle. Insbesondere textile und textilähnliche Dekorabschnitte werden als besonders hochwertig empfunden.

Aus DE 199 37 285 A1 ist ein Duplexprofil bekannt, dessen Oberfläche von einem Kaschierband mindestens bereichsweise überdeckt wird. Das Kaschierband ist ein Textilband aus Grund- und Plüschfaden und besteht aus Polyesterbauschgarn. Das Kaschierband wird in Profillängsrichtung vorgespannt und mit einem Teil des Duplexprofils verklebt. Das Kaschierband bildet den Dekorabschnitt.

Aus EP 0 794 087 A1 ist ein Dichtungsstreifen bekannt, der eine Stoff- oder Textilabdeckung aufweist. Die Textilabdeckung erstreckt sich auf der Außenfläche einer Dekorlippe und bildet den Dekorabschnitt. Die Stoff- oder Textilabdeckung ist mit dem darunterliegenden Gummikörper verklebt.

Ein Dichtungsstrang ist zudem aus DE 196 22 342 A1 bekannt und wird als Kantenschutz- oder Dichtungsprofil bezeichnet. Das Dichtungsprofil umfasst einen im Querschnitt U-förmigen Befestigungsabschnitt, der auf einen Flansch des Kraftfahrzeugs geklemmt werden kann. Das Dichtungsprofil hat einen umhüllenden Textilbezug. Der Textilbezug dient einerseits dem Design des Profilstranges und andererseits als Gleitfläche, beispielsweise für eine Kraftfahrzeugscheibe. Der Textilbezug ist in stark beanspruchten Bereichen zusätzlich mit einer Schutzschicht versehen.

Aus DE 10 2010 016 756 A1 ist eine Abdecklippe für den Einstiegsbereich von Kraftfahrzeugen bekannt, die ein Gummiprofil aufweist. Die Abdecklippe hat einen Dekorabschnitt aus thermoplastischem Elastomer, der mit einem Gleitlack versehen ist.

Aus EP 1 717 082 A2 ist ein Dichtungsstrang bekannt, der eine Strukturierung aufweist und mit einem Strukturlack beschichtet ist.

DE 10 2011 107 137 A1 offenbart ein extrudiertes Kunststoffprofil, das eine verzögerte Wärmefreisetzungsrate unter Brandlast aufweist. Das Kunststoffprofil hat dazu eingebettete nicht-brennbare Fasern aus Carbon, Glas, Basalt oder Aramid. Im Unterschied zu dem Dichtungsstrang entsprechend der vorliegenden Erfindung, sind diese Fasern jedoch nicht sichtbar, sondern von dem Matrixmaterial so umschlossen, dass sie abgedeckt sind. Die Fasern sind demnach nicht an einem Dekorabschnitt angeordnet.

DE 26 23 316 C3 offenbart einen Profilstreifen. Der Profilstreifen umfasst einen Befestigungsabschnitt und einen Dichtungsabschnitt. Eine Deckschicht ist auf dem Befestigungsabschnitt und dem Dichtungsabschnitt vorgesehen. Der Befestigungsabschnitt und der Dichtungsabschnitt sind aus festem Kunststoff. Die Deckschicht hingegen ist aus Schaumgummi gefertigt. Die Deckschicht ist mit einer Auflage aus Flock oder Textilmaterial versehen.

EP 2 290 020 A1 offenbart eine geräuschmindernde Gleitbeschichtung sowie deren Herstellungsverfahren. Ziel ist die Vermeidung des Stick-Slip-Effekts. Die Gleitbeschichtung wird durch auftragen eines Klebers und anschließendes elektrostatisches Beflocken erzeugt.

Die zuvor genannten Profilstränge haben jeweils wenigstens einen Abschnitt, der eine textilähnliche Oberfläche imitiert. Die Praxis hat gezeigt, dass derartige Dekorabschnitte empfindlich gegenüber mechanischer Beanspruchung, insbesondere Abrieb, sind. Die mechanische Belastbarkeit kann zwar durch eine dickere Lackschicht erhöht werden, dies muss jedoch mit einem deutlichen Verlust an Textur, das heißt einer Verringerung der haptischen und optischen Tiefe, erkauft werden. Die Verringerung der haptischen und optischen Tiefe ist unerwünscht. Zudem ist für die Beflockung ein zusätzlicher Verfahrensschritt notwendig, der zudem eine zusätzliche Maschine benötigt.

Eine faserverstärkte Harzzusammensetzung, die ein Produkt, das durch Schmelzkneten eines ersten Harzes und eines zweiten Harzes mit einer reaktiven funktionellen Gruppe hergestellt wurde, ein drittes Harz und einen faserartigen Füllstoff umfasst, wird in US 2012/0028047 A1 beschrieben.

Ein Verfahren und eine Vorrichtung zum Versehen von Profilen aus elastischen Massen mit Velourbändchen wird in DE 31 07 889 A1 beschrieben. Das Aufbringen der Velourbändchen erfolgt in ein bereits gebildetes, erwärmtes Profil mittels einer Vorrichtung, bei der ein Führungselement einer Spritzscheibe zugeordnet ist, um das Velourbändchen am Austritt aus der Presse in das Material einzulegen. Diese Profile werden als Abdichtungsprofile in Fensterführungen in der Automobilindustrie verwendet.

Der Erfindung liegt die Aufgabe zugrunde, einen Profilstrang anzugeben, der eine optisch ansprechende Oberfläche hat und vergleichsweise unempfindlich gegenüber mechanischer Beanspruchung ist.

Die Aufgabe wird durch den Gegenstand der Ansprüche 1 und 12 gelöst. Bevorzugte Ausführungsformen des Profilstranges sind Gegenstand der Ansprüche 2 bis 11. Bevorzugte Ausführungsformen des Herstellungsverfahrens sind Gegenstand der Ansprüche 13 bis 17.

Die Erfindung schafft einen Profilstrang, insbesondere für ein Kraftfahrzeug, der einen Dekorabschnitt, der aus einem Faserverbundmaterial gebildet ist, umfasst. Das Faserverbundmaterial weist eine Elastomermatrix aus einem ersten Elastomer und Flockfasern auf. Die Flockfasern haben jeweils eine Faserlänge, die aus einer ersten Länge und einer zweiten Länge zusammengesetzt ist. Die Flockfasern haben zudem jeweils einen in der Elastomermatrix eingebetteten Matrixbereich und einen aus der Elastomermatrix hervorstehenden Expositionsbereich. Der Matrixbereich hat die erste Länge und der Expositionsbereich hat die zweite Länge.

Die Flockfasern stehen mit dem Expositionsbereich aus der Elastomermatrix hervor. Die Flockfasern erzeugen die textilähnliche Optik und Haptik - beides zusammen wird auch Textur genannt - einer textilähnlichen Oberfläche. Die Flockfasern sind insbesondere zu einem Großteil mit dem Matrixbereich in der Elastomermatrix eingebettet. Die Flockfasern sind somit fest verankert und lösen sich dementsprechend bei üblicher mechanischer Beanspruchung, beispielsweise durch Reiben, nicht aus dem Dekorabschnitt. Der Profilstrang entsprechend der vorliegenden Erfindung hat eine ansprechende Optik und ist vergleichsweise unempfindlich gegenüber mechanischer Beanspruchung, wie beispielsweise Abrieb.

Das Faserverbundmaterial ist insbesondere extrudierbar. Extrudierbar und ist hierbei so zu verstehen, dass das Faserverbundmaterial extrudiert oder koextrudiert werden kann. Das Faserverbundmaterial ist auch für Spritzgießen geeignet. Das erste Elastomer und die Flockfasern werden vorteilhaft bereits vor dem Extrudieren oder Spritzgießen zu dem Faserverbundmaterial zusammengemischt. Alternativ findet das Mischen beim Extrudieren statt. Eine nachträgliche Beflockung kann somit entfallen.

Vorzugsweise umfasst der Profilstrang neben dem Befestigungsabschnitt zum Befestigen des Profilstranges noch einen Dichtungsabschnitt.

Wenn er mit einem Dichtungsabschnitt versehen ist, kann der Profilstrang als Dichtungsprofil verwendet werden. Der Befestigungsabschnitt ermöglicht ein Befestigen des Profilstranges an dem Kraftfahrzeug. Zudem kann der Dekorabschnitt aufgrund der Elastomermatrix unmittelbar an dem Befestigungsabschnitt und/oder dem Dichtungsabschnitt angeformt sein. Eines Klebstoffes bedarf es hierzu nicht. Dadurch wird der Materialverbrauch gegenüber vergleichbaren Dichtungsprofilen beim Herstellen verringert und zudem gleichzeitig die Umweltverträglichkeit der Herstellung gesteigert.

Es ist bevorzugt, dass der Dekorabschnitt Erhebungen, die jeweils einen ersten Scheitelpunkt und eine Höhe aufweisen, und Vertiefungen, die jeweils einen zweiten Scheitelpunkt aufweisen, umfasst, wobei zwei benachbarte Erhebungen einen Abstand aufweisen.

Die Höhe der Erhebungen beträgt vorzugsweise zwischen 100 µm und 500 µm. Die Höhe wird bevorzugt von einer Verbindungslinie zweier benachbarter zweiter Scheitelpunkte bis zu dem ersten Scheitelpunkt, der zwischen den benachbarten zweiten Scheitelpunkten liegt, orthogonal zu der Verbindungslinie gemessen.

Vorzugsweise beträgt der Abstand zweier benachbarter Erhebungen zwischen 500 µm und 1 mm. Der Abstand wird bevorzugt von dem ersten Scheitelpunkt der einen Erhebung zu dem ersten Scheitelpunkt der anderen Erhebung gemessen.

Weiter bevorzugt sind die Erhebungen und Vertiefungen derart ausgebildet, dass die Flockfasern unter einem Winkel aus der Elastomermatrix hervorstehen. Der Winkel ist zwischen dem Expositionsbereich, der den ersten Winkelschenkel bildet, und der Tangentialebene, die den zweiten Winkelschenkel bildet, an die Oberfläche des Dekorabschnittes an dem Punkt, an dem die Flockfaser aus der Elastomermatrix austritt, gemessen. Insbesondere ist der Winkel ein spitzer Winkel.

Bei diesen bevorzugten Ausgestaltungen können die Optik und Haptik des Dekorabschnitts verschiedene textilähnliche Oberflächen imitieren. Die Erhebungen und Vertiefungen ermöglichen zudem ein einfacheres Hervortreten der Flockfasern, so dass die optische und haptische Oberflächentiefe zunehmen. Die verschiedenen Abmessungen der Erhebungen erlauben eine Anpassung der Textur an die gewünschte Anwendung.

Zudem wird vorzugsweise das erste Elastomer aus einer Gruppe gewählt, die Ethylen-Propylen-Dien-Kautschuk (EPDM) und ein thermoplastisches Elastomer (TPE), insbesondere ein thermoplastisches Vulkanisat (TPV) oder ein Styrol-Blockcopolymer (TPS), umfasst. Das erste Elastomer hat vorzugsweise eine Shore-A-Härte von 50 ShA bis 85 ShA und insbesondere eine Shore-A-Härte von 50 ShA bis 80 ShA. Das erste Elastomer kann beliebig eingefärbt sein.

Vorzugsweise ist der Befestigungsabschnitt aus einem zweiten Elastomer gebildet. Vorzugsweise ist der Dichtungsabschnitt aus einem dritten Elastomer gebildet. Das zweite Elastomer und/oder das dritte Elastomer werden vorzugsweise aus einer Gruppe gewählt, die Ethylen-Propylen-Dien-Kautschuk (EPDM) und ein thermoplastisches Elastomer (TPE), insbesondere ein thermoplastisches Vulkanisat (TPV) oder ein Styrol-Blockcopolymer (TPS), umfasst. Das zweite Elastomer und/oder das dritte Elastomer haben vorzugsweise eine Shore-A-Härte von 50 ShA bis 85 ShA und insbesondere eine Shore-A-Härte von 50 ShA bis 80 ShA. Das zweite Elastomer und/oder das dritte Elastomer können beliebig eingefärbt sein.

Durch die verschiedenen Elastomerarten können der Befestigungsabschnitt, der Dichtungsabschnitt und der Dekorabschnitt aufeinander abgestimmt werden. Die unterschiedlichen Kunststoffhärten ermöglichen zudem, die Optik und Haptik des Dekorabschnitts wie gewünscht festzulegen. Insgesamt wird dadurch der Anwendungsbereich des Profilstranges erweitert.

Die Flockfasern können bevorzugt Polyamid-Fasern, Polyethylen-Fasern, mineralische Fasern und/oder textile Fasern enthalten. Vorzugsweise haben die Flockfasern eine Faserlänge zwischen 0,1 mm und 5 mm. Vorzugsweise haben die Flockfasern eine Feinheit von 0,1 dtex bis 30 dtex. Vorzugsweise ist die erste Länge größer als die zweite Länge. Insbesondere beträgt die erste Länge mehr als 70%, weiter bevorzugt mehr als 90%, der Faserlänge. Die Flockfasern können beliebig eingefärbt sein.

Die unterschiedlichen Arten von Flockfasern ermöglichen die Imitation weiterer textilähnlicher Oberflächen. Die Textur kann an einen breiteren Anwendungsbereich angepasst werden.

Weiter bevorzugt weist der Dekorabschnitt eine Lackbeschichtung auf. Besonders bevorzugt enthält die Lackbeschichtung einen Strukturlack, der insbesondere Partikel enthält. Die Lackbeschichtung kann beliebig eingefärbt sein.

Die Widerstandsfähigkeit des Dekorabschnitts gegen mechanische Beanspruchung kann weiter gesteigert werden, wenn zusätzlich eine Lackschicht auf dem Dekorabschnitt aufgetragen ist. Ein Strukturlack ermöglicht zudem eine größere optische und haptische Tiefe.

Der zuvor erläuterte Profilstrang wird hergestellt, indem in Schritt a) ein Dekorabschnitt aus einem Faserverbundmaterial erzeugt wird. Der Dekorabschnitt wird insbesondere durch Extrudieren oder Spritzgießen erzeugt. Das Faserverbundmaterial weist eine Elastomermatrix aus einem ersten Elastomer und Flockfasern auf. Der Dekorabschnitt wird derart erzeugt, dass die Flockfasern jeweils eine Faserlänge haben, die aus einer ersten Länge und einer zweiten Länge zusammengesetzt ist, und jeweils einen in der Elastomermatrix eingebetteten Matrixbereich und einen aus der Elastomermatrix hervorstehenden Expositionsbereich aufweisen.

Der Matrixbereich hat die erste Länge und der Expositionsbereich hat die zweite Länge.

Vorzugsweise wird das Faserverbundmaterial vor dem Extrudieren aus dem ersten Elastomer und den Flockfasern gemischt. Alternativ wird das Faserverbundmaterial aus dem ersten Elastomer und den Flockfasern während des Extrudierens gemischt. Eine nachträgliche Beflockung kann somit entfallen.

Vorzugsweise werden in Schritt b) ein Befestigungsabschnitt und/oder ein Dichtungsabschnitt erzeugt. Der Befestigungsabschnitt und/oder der Dichtungsabschnitt werden insbesondere durch Extrudieren oder Spritzgießen erzeugt.

Es ist bevorzugt, dass in Schritt c) der Dekorabschnitt mit Erhebungen derart, dass die Erhebungen jeweils einen ersten Scheitelpunkt und eine Höhe aufweisen, und mit Vertiefungen derart, dass die Vertiefungen jeweils einen zweiten Scheitelpunkt aufweisen, wobei zwei benachbarte Erhebungen einen Abstand aufweisen, versehen wird.

Vorzugsweise wird in Schritt d) der Dekorabschnitt mit einer Lackbeschichtung versehen, die insbesondere einen Strukturlack oder Gleitlack enthält. Der Strukturlack kann Partikel enthalten.

Vorzugsweise werden entweder
I) die Schritte a) und b) oder
II) die Schritte a) und c) oder
III) die Schritte b) und c) oder
IV) die Schritte a), b) und c)
ohne Zwischenschritt nacheinander, insbesondere gleichzeitig miteinander, ausgeführt. Es ist zudem bevorzugt, dass Schritt d) ohne Zwischenschritt nach, insbesondere gleichzeitig mit, einer der Alternativen I) bis IV) ausgeführt wird.

Ausführungsformen der Erfindung werden nachfolgend anhand der beigefügten Figuren erläutert. Darin zeigt:
- Fig. 1: eine seitliche Teilansicht eines Kraftfahrzeugs;
- Fig. 2: einen Querschnitt entlang der Linie I-I einer ersten Ausführungsform des Profilstranges;
- Fig. 3: eine vergrößerte Ansicht des Bereichs A aus Fig. 2.
- Fig. 4: einen Querschnitt entlang der Linie II-II einer zweiten Ausführungsform des Profilstranges; und

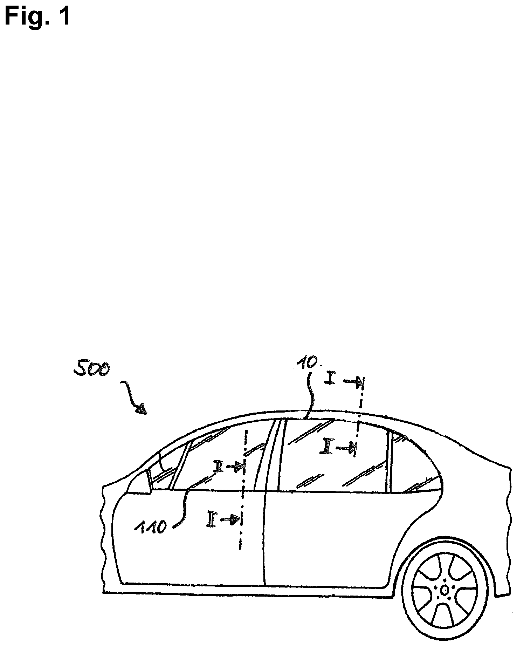

Gemäß Fig. 1 umfasst ein Kraftfahrzeug 500 einen Dichtungsstrang 10, der an der Oberseite einer Türöffnung im Innenraum angeordnet ist. Der Dichtungsstrang 10 überdeckt den Übergang zum Dachhimmel.

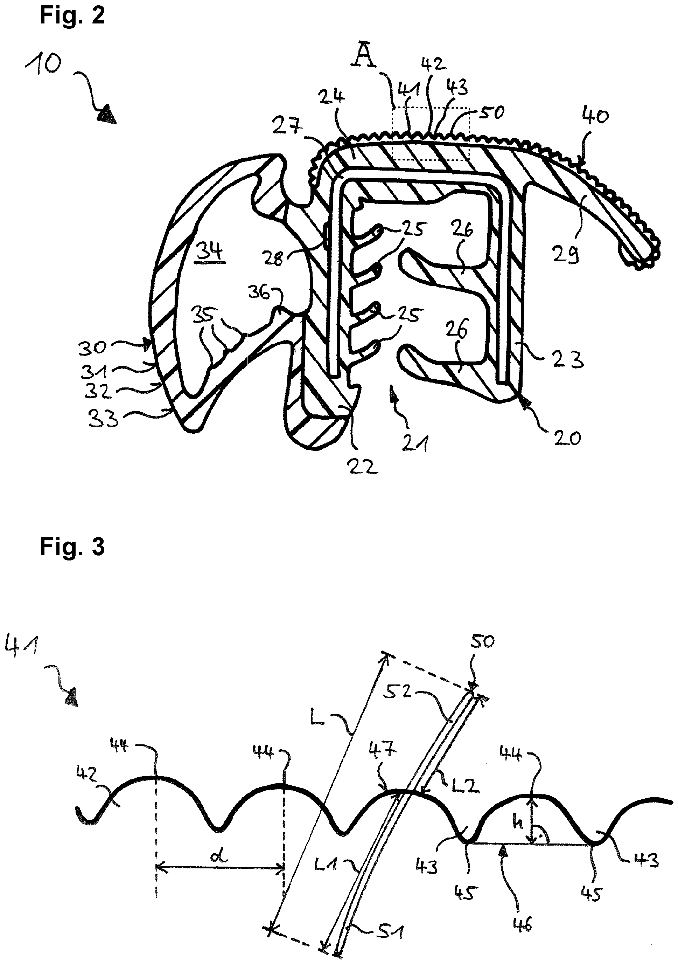

Wie aus Fig. 2 ersichtlich, umfasst der Dichtungsstrang 10 entsprechend der ersten Ausführungsform einen Befestigungsabschnitt 20, einen Dichtungsabschnitt 30 und einen Dekorabschnitt 40.

Der Befestigungsabschnitt 20 ist aus TPE gebildet. Der Befestigungsabschnitt 20 hat einen Aufnahmebereich 21 zum Aufnehmen eines Vorsprungs des Kraftfahrzeugs 500. Der Aufnahmebereich 21 wird von einem ersten Schenkel 22, einem zweiten Schenkel 23 und einem Basisabschnitt 24 begrenzt. Der erste und zweite Schenkel 22, 23 sind an einander entfernt liegenden Enden des Basisabschnitts 24 angeordnet und erstrecken sich im Wesentlichen parallel in dieselbe Richtung. In den Befestigungsabschnitt 20 sind eine erste Armierung 27 und eine zweite Armierung 28 eingebettet.

An dem ersten Schenkel 21 sind vier äußere Befestigungslippen 25 angeordnet, die sich in Richtung auf den zweiten Schenkel 23 in den Aufnahmebereich 21 erstrecken. An dem zweiten Schenkel 23 sind zwei innere Befestigungslippen 26 angeordnet, die sich in Richtung auf den ersten Schenkel 22 in den Aufnahmebereich 21 hinein erstrecken. An dem Basisabschnitt 24 ist eine Dekorlippe 29 angeordnet, die sich von dem Basisabschnitt 24 in eine Richtung weg von dem Basisabschnitt 24 erstreckt.

Die erste Armierung 27 ist im Wesentlichen U-förmig ausgebildet und in den ersten Schenkel 22, den zweiten Schenkel 23 und den Basisabschnitt 24 eingebettet. Die zweite Armierung 28 ist auf der dem Dichtungsabschnitt 30 zugewandten Seite in den ersten Schenkel 22 eingebettet.

Wenn der Aufnahmebereich 21 einen Vorsprung des Kraftfahrzeugs 500 aufnimmt, werden die äußeren und inneren Befestigungslippen 25, 26 an dem Vorsprung abgestützt und verhindern ein Lösen des Dichtungsstranges 10. Die erste Armierung 27 presst die inneren und äußeren Befestigungslippen 25, 26 zusätzlich gegen den Vorsprung, so dass eine höhere Haltekraft entsteht.

Der Dichtungsabschnitt 30 ist aus EPDM gebildet. Der Dichtungsabschnitt 30 hat eine Dichtungsfläche 31, die dem Befestigungsabschnitt 20 abgewandt ist. Die Dichtungsfläche 31 weist eine Beflockungsschicht 32 aus Flock auf. Die Beflockungsschicht 32 ist zudem mit einer Gleitlackschicht 33 versehen. Der Dichtungsabschnitt 30 begrenzt zusammen mit einem Abschnitt des ersten Schenkels 22 einen Hohlraum 34. In den Hohlraum 34 ragen drei erste Vorsprünge 35, die auf einem Schenkel des Dichtungsabschnitts 30 angeordnet sind. An einem Ende des Schenkels, das dem Befestigungsabschnitt 20 zugewandt ist, befindet sich ein zweiter Vorsprung 36. Der zweite Vorsprung 36 ist größer und ragt weiter in den Hohlraum 34 hinein als die ersten Vorsprünge 35.

Der Dekorabschnitt 40 ist an dem Befestigungsabschnitt 20 angeordnet. Der Dekorabschnitt 40 weist eine sichtbare Oberfläche 41 auf, die im Einbauzustand von einem Betrachter gesehen werden kann. Die sichtbare Oberfläche 41 ist mit Erhebungen 42 und Vertiefungen 43 versehen. Der Dekorabschnitt 40 ist aus einer Fasermischung gebildet. Die Fasermischung hat eine Elastomermatrix aus EPDM und darin eingebettete Flockfasern 50 aus Polyamid. Der Dekorabschnitt 40 ist mit einer Lackschicht 47 versehen. Die Lackschicht 47 enthält einen Strukturlack, der Partikel enthält.

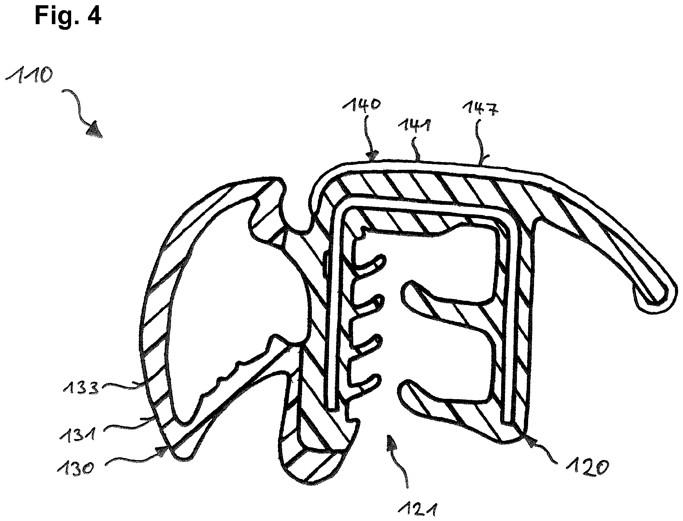

Wie in Fig. 3 dargestellt, weisen die Erhebungen 42 erste Scheitelpunkte 44 und die Vertiefungen 43 zweite Scheitelpunkte 45 auf. Wegen der besseren Übersichtlichkeit, sind in Fig. 4 nur die für die Erläuterung notwendigen ersten und zweiten Scheitelpunkte 44, 45 dargestellt.

Zwei benachbarte zweite Scheitelpunkte 45 sind durch eine Verbindungslinie 46 verbunden. Die betrachtete Erhebung 42 weist eine Höhe h auf. Die Höhe h ist die orthogonale Distanz zwischen dem ersten Scheitelpunkt 44 der betrachteten Erhebung 42 und der Verbindungslinie 46. Die Höhe h der Erhebung 42 beträgt zwischen 100 µm und 500 µm.

Zwei benachbarte Erhebungen 42 haben einen Abstand d voneinander. Der Abstand d ist die kürzeste Distanz zwischen den jeweiligen ersten Scheitelpunkten 44 der zwei benachbarten Erhebungen 42. Der Abstand d beträgt zwischen 500 µm und 1 mm.

Fig. 3 zeigt außerdem schematisch eine der Flockfasern 50. Die Flockfaser 50 hat einen Matrixbereich 51, einen Expositionsbereich 52 und eine Faserlänge L. Der Matrixbereich 51 ist in der Elastomermatrix eingebettet und hat eine erste Länge L1. Der Expositionsbereich 52 ragt aus der Elastomermatrix hervor und hat eine zweite Länge L2. Die erste Länge L1 ist größer als die zweite Länge L2. Die zweite Länge L2 ist 15 µm.

Der Dichtungsstrang 10 wird mittels Extrusion hergestellt. Dazu werden zunächst die erste und zweite Armierung 27, 29 bereitgestellt. In einem Arbeitsgang werden der Befestigungsabschnitt 20, der Dichtungsabschnitt 30 und der Dekorabschnitt 40 um die erste und zweite Armierung 27, 29 herum koextrudiert. Der Befestigungsabschnitt 20 wird aus einem TPE extrudiert. Der Dichtungsabschnitt 30 wird aus EPDM extrudiert. Der Dekorabschnitt 40 wird aus der Fasermischung extrudiert, die eine Elastomermatrix aus EPDM und darin eingebettete Flockfasern 50 aus Polyamid enthält. Der Dekorabschnitt 40 wird mit der Lackschicht 47, die einen Strukturlack enthält, versehen.

Das Kraftfahrzeug 500 umfasst zudem einen Dichtungsstrang 110 gemäß einer zweiten Ausführungsform, die in Fig. 4 dargestellt ist. Der Dichtungsstrang 110 ist als Fensterschachtdichtung vorgesehen.

Der Dichtungsstrang 110 umfasst einen Befestigungsabschnitt 120, einen Dichtungsabschnitt 130 und einen Dekorabschnitt 140.

Der Befestigungsabschnitt 120 ist aus EPDM gefertigt. Der Befestigungsabschnitt 120 hat einen Aufnahmebereich 121 zum Aufnehmen eines Vorsprungs des Kraftfahrzeugs 500. Im Übrigen ist der Befestigungsabschnitt 120 identisch zu dem Befestigungsabschnitt 120.

Der Dichtungsabschnitt 130 ist aus TPS gefertigt. Der Dichtungsabschnitt 130 hat eine Dichtungsfläche 131, die dem Befestigungsabschnitt 120 abgewandt ist. Die Dichtungsfläche 131 weist eine Gleitlackschicht 133 auf. Im Übrigen ist der Dichtungsabschnitt 130 identisch zu dem Dichtungsabschnitt 30.

Der Dekorabschnitt 140 ist an dem Befestigungsabschnitt 120 angeordnet. Der Dekorabschnitt 140 weist eine sichtbare Oberfläche 141 auf. Die sichtbare Oberfläche 141 kann, wie die sichtbare Oberfläche 41 der ersten Ausführungsform, im Einbauzustand von einem Betrachter gesehen werden. Der Dekorabschnitt 40 ist aus einer Fasermischung gebildet. Die Fasermischung hat eine Elastomermatrix aus TPV und darin eingebettete Flockfasern aus Polyethylen. Der Dekorabschnitt 140 ist mit einer Lackschicht 147 versehen. Die Lackschicht 147 enthält einen Gleitlack. Im Übrigen ist der Dekorabschnitt 140 identisch zu dem Dekorabschnitt 40.

Der Dichtungsstrang 110 wird mittels Extrusion hergestellt. Dazu werden zunächst die erste und zweite Armierung 27, 29 bereitgestellt. In einem Arbeitsgang werden der Befestigungsabschnitt 120, der Dichtungsabschnitt 130 und der Dekorabschnitt 140 um die erste und zweite Armierung 27, 29 herum koextrudiert. Der Befestigungsabschnitt 20 wird aus EPDM extrudiert. Der Dichtungsabschnitt 130 wird aus TPS extrudiert. Der Dekorabschnitt 40 wird aus der Fasermischung extrudiert, die eine Elastomermatrix aus TPV und darin eingebettete Flockfasern aus Polyethylen enthält. Der Dekorabschnitt 140 wird mit der Lackschicht 147, die einen Gleitlack enthält, versehen.

Durch den Dichtungsstrang entsprechend der vorliegenden Erfindung können die Optik und Haptik von Textilien, Geweben oder Gestricken nachempfunden werden. Die Verwendung der Fasermischung ist wesentlich kostengünstiger als eine Kaschierung des Profilstranges mit textilen Stoffen. Im Vergleich zu den bisher existierenden textilähnlichen Dekorabschnitten kann bei dem Dichtungsstrang entsprechend der vorliegenden Erfindung eine ausgeprägte Gewebetextur nachempfunden werden, die zudem vergleichsweise unempfindlich gegenüber mechanischer Beanspruchung, wie etwa Abrieb, ist.

### Bezugszeichenliste

- 10: Dichtungsstrang

- 20: Befestigungsabschnitt
- 21: Aufnahmebereich
- 22: erster Schenkel
- 23: zweiter Schenkel
- 24: Basisabschnitt
- 25: äußere Befestigungslippe
- 26: innere Befestigungslippe
- 27: erste Armierung
- 28: zweite Armierung
- 29: Dekorlippe

- 30: Dichtungsabschnitt
- 31: Dichtungsfläche
- 32: Beflockungsschicht
- 33: Gleitlackschicht
- 34: Hohlraum
- 35: erster Vorsprung
- 36: zweiter Vorsprung

- 40: Dekorabschnitt
- 41: Oberfläche
- 42: Erhebung
- 43: Vertiefung
- 44: erster Scheitelpunkt
- 45: zweiter Scheitelpunkt
- 46: Verbindungslinie
- 47: Lackbeschichtung

- 50: Flockfaser
- 51: Matrixbereich
- 52: Expositionsbereich

- 110: Dichtungsstrang

- 120: Befestigungsabschnitt
- 121: Aufnahmebereich

- 130: Dichtungsabschnitt
- 131: Dichtungsfläche
- 133: Gleitlackschicht

- 140: Dekorabschnitt
- 141: Oberfläche
- 147: Lackbeschichtung

- 500: Kraftfahrzeug

- h: Höhe
- d: Abstand

- L: Faserlänge
- L1: erste Länge
- L2: zweite Länge

## Patentansprüche

1. Profilstrang (10, 110)für ein Kraftfahrzeug (500), umfassend:
einen Befestigungsabschnitt (20, 120);
einen Dekorabschnitt (40, 140), der eine sichtbare Oberfäche (41, 141) aufweist, die zur Erhöhung der optischen und haptischen Oberflächentiefe mit Erhebungen (42) und Vertiefungen (43) versehen ist;
wobei der Dekorabschnitt (40, 140) aus einem Faserverbundmaterial gebildet ist, das eine Elastomermatrix aus einem ersten Elastomer und in der Elastomermatrix eingebettete Flockfasern (50) aufweist,
wobei zum Erzeugen einer textilähnlichen Optik und Haptik die Flockfasern (50) jeweils eine Faserlänge (L) haben, die aus einer ersten Länge (L1) und einer zweiten Länge (L2) zusammengesetzt ist, und jeweils einen in der Elastomermatrix eingebetteten Matrixbereich (51) und einen aus der Elastomermatrix hervorstehenden Expositionsbereich (52) aufweisen;
wobei der Matrixbereich (51) die erste Länge (L1) hat und der Expositionsbereich (52) die zweite Länge (L2) hat und
wobei die erste Länge (L1) größer als die zweite Länge (L2) ist.

2. Profilstrang (10, 110) nach Anspruch 1, **gekennzeichnet durch** einen Dichtungsabschnitt (30, 130).

3. Profilstrang (10, 110) nach Anspruch 1 oder 2, **dadurch gekennzeichnet, dass** die Erhebungen (42) jeweils einen ersten Scheitelpunkt (44) und eine Höhe (h) aufweisen und die Vertiefungen (43) jeweils einen zweiten Scheitelpunkt (45) aufweisen, wobei zwei benachbarte Erhebungen (42) einen Abstand (d) aufweisen.

4. Profilstrang (10,110) nach Anspruch 3, **dadurch gekennzeichnet,**
**dass** die Höhe (h) zwischen 100 µm und 500 µm beträgt, wobei vorzugsweise die Höhe (h) von einer Verbindungslinie (46) zweier benachbarter zweiter Scheitelpunkte (45) bis zu dem ersten Scheitelpunkt (44), der zwischen den benachbarten zweiten Scheitelpunkten (45) liegt, orthogonal zu der Verbindungslinie (46) gemessen wird und/oder
**dass** der Abstand (d) zweier benachbarter Erhebungen (45) zwischen 500 µm und 1 mm beträgt, wobei vorzugsweise der Abstand (d) von dem ersten Scheitelpunkt (44) der einen Erhebung (42) zu dem ersten Scheitelpunkt (44) der anderen Erhebung (42) gemessen wird.

5. Profilstrang (10, 110) nach einem der Ansprüche 1 bis 4, **dadurch gekennzeichnet, dass** das erste Elastomer aus einer Gruppe gewählt wird, die Ethylen-Propylen-Dien-Kautschuk und ein thermoplastisches Elastomer, insbesondere ein thermoplastisches Vulkanisat oder ein Styrol-Blockcopolymer, umfasst.

6. Profilstrang (10, 110) nach einem der Ansprüche 1 bis 5, **dadurch gekennzeichnet, dass** das erste Elastomer eine Shore-A-Härte von 50 ShA bis 85 ShA aufweist.

7. Profilstrang (10, 110) nach einem der Ansprüche 2 bis 6, **dadurch gekennzeichnet,**
**dass** der Befestigungsabschnitt (20, 120) aus einem zweiten Elastomer gebildet ist und/oder
**dass** der Dichtungsabschnitt (30, 130) aus einem dritten Elastomer gebildet ist,
wobei vorzugsweise das zweite Elastomer und/oder das dritte Elastomer aus einer Gruppe gewählt werden, die Ethylen-Propylen-Dien-Kautschuk und ein thermoplastisches Elastomer, insbesondere ein thermoplastisches Vulkanisat oder ein Styrol-Blockcopolymer, umfasst.

8. Profilstrang (10, 110) nach einem der Ansprüche 1 bis 7, **dadurch gekennzeichnet, dass** die Flockfasern (50) Polyamid-Fasern, Polyethylen-Fasern, mineralische Fasern und/oder textile Fasern enthalten.

9. Profilstrang (10, 110) nach einem der Ansprüche 1 bis 8, **dadurch gekennzeichnet, dass** der Dekorabschnitt (40, 140) eine Lackbeschichtung (47, 147), insbesondere aus einem Strukturlack oder Gleitlack, aufweist.

10. Profilstrang (10, 110) nach einem der Ansprüche 1 bis 9, **dadurch gekennzeichnet, dass** die Flockfasern (50) eine Faserlänge zwischen 0,1 mm und 5 mm haben, wobei vorzugsweise die Flockfasern (50) eine Feinheit von 0,1 dtex bis 30 dtex haben.

11. Profilstrang (10, 110) nach einem der Ansprüche 1 bis 10, **dadurch gekennzeichnet, dass** die erste Länge (L1) mehr als 70% und insbesondere mehr als 90% der Faserlänge (L) beträgt.

12. Verfahren zum Herstellen eines Profilstranges (10, 110) nach einem der Ansprüche 1 bis 11, umfassend die Schritte:
a) Extrudieren oder Spritzgießen eines Dekorabschnitts (40, 140), der eine sichtbare Oberfäche (41, 141) hat, aus einem Faserverbundmaterial, das eine Elastomermatrix aus einem ersten Elastomer und in der Elastomermatrix eingebettete Flockfasern (50) aufweist, derart, dass zum Erzeugen einer textilähnlichen Optik und Haptik die Flockfasern (50) jeweils eine Faserlänge (L) haben, die aus einer ersten Länge (L1) und einer zweiten Länge (L2) zusammengesetzt ist, und jeweils einen in der Elastomermatrix eingebetteten Matrixbereich (51) und einen aus der Elastomermatrix hervorstehenden Expositionsbereich (52) aufweisen, wobei der Matrixbereich (51) die erste Länge (L1) hat und der Expositionsbereich (52) die zweite Länge (L2) hat und wobei die erste Länge (L1) größer als die zweite Länge (L2) ist;
b) Erzeugen eines Befestigungsabschnitts (20, 120) und
c) Versehen des Dekorabschnitts (40, 140) mit Erhebungen (42) und Vertiefungen (43) zur Erhöhung der optischen und haptischen Oberflächentiefe.

13. Verfahren nach Anspruch 12, **dadurch gekennzeichnet, dass** das Faserverbundmaterial vor oder bei dem Erzeugen des Dekorabschnittes (40, 140) gemischt wird.

14. Verfahren nach Anspruch 12 oder 13, **gekennzeichnet durch** den Schritt:
d) Erzeugen eines Dichtungsabschnitts (30 ,130).

15. Verfahren nach einem der Ansprüche 12 bis 14, **gekennzeichnet durch** den Schritt:
e) Versehen des Dekorabschnitts (40, 140) mit Erhebungen (42) derart, dass die Erhebungen (42) jeweils einen ersten Scheitelpunkt (44) und eine Höhe (h) aufweisen, und mit Vertiefungen (43) derart, dass die Vertiefungen (43) jeweils einen zweiten Scheitelpunkt (45) aufweisen, wobei zwei benachbarte Erhebungen (42) einen Abstand (d) aufweisen.

16. Verfahren nach einem der Ansprüche 12 bis 15, **gekennzeichnet durch** den Schritt:
f) Versehen des Dekorabschnitts (40, 140) mit einer Lackbeschichtung (47, 147), die insbesondere einen Strukturlack oder Gleitlack enthält.

17. Verfahren nach einem der Ansprüche 12 bis 16, **dadurch gekennzeichnet, dass** entweder
I) die Schritte a) und b) oder
II) die Schritte a) und c) oder
III) die Schritte b) und c) oder
IV) die Schritte a), b) und c) ohne Zwischenschritt nacheinander oder gleichzeitig miteinander ausgeführt werden,
wobei vorzugsweise Schritt d) ohne Zwischenschritt nach oder gleichzeitig mit einer der Alternativen I) bis IV) ausgeführt wird.

## Claims

1. Profile strand (10, 110) for a motor vehicle (500), comprising:
an attachment portion (20, 120);
a trimming portion (40, 140), which has a visible surface (41, 141) that is provided with elevations (42) and recesses (43) for an enhancement of the visual and haptic surface depth;
the trimming portion (40, 140) being formed of a fibre composite material comprising an elastomer matrix of a first elastomer and flock fibres (50) embedded in the elastomer matrix,
for producing a textile-like look and feel, the flock fibres (50) each having a fibre length (L) composed of a first length (L1) and a second length (L2), and each having a matrix region (51) embedded in the elastomer matrix and an exposition region (52) protruding from the elastomer matrix;
the matrix region (51) having the first length (L1) and the exposition region (52) having the second length (L2), and
the first length (L1) being greater than the second length (L2).

2. Profile strand (10, 110) according to claim 1, **characterised by** a sealing portion (30, 130).

3. Profile strand (10, 110) according to claim 1 or 2, **characterised in that** the elevations (42) each have a first vertex (44) and a height (h) and the recesses (43) each have a second vertex (45), two adjacent elevations (42) having a distance (d).

4. Profile strand (10, 110) according to claim 3, **characterised in that** the height (h) is between 100 µm and 500 µm, the height (h) preferably being measured from a connecting line (46) of two adjacent second vertices (45) up to the first vertex (44), which is positioned between the adjacent second vertices (45), orthogonally to the connecting line (46), and/or
that the distance (d) of two adjacent elevations (42) is between 500 µm and 1 mm, the distance (d) preferably being measured from the first vertex (44) of the one elevation (42) up to the first vertex (44) of the other elevation (42).

5. Profile strand (10, 110) according to any one of claims 1 to 4, **characterised in that** the first elastomer is selected from a group comprising ethylene-propylene-diene rubber and a thermoplastic elastomer, in particular a thermoplastic vulcanisate or a block copolymer of styrene.

6. Profile strand (10, 110) according to any one of claims 1 to 5, **characterised in that** the first elastomer has a Shore A hardness of 50 ShA to 85 ShA.

7. Profile strand (10, 110) according to any one of claims 2 to 6, **characterised in that**
the attachment portion (20, 120) is formed of a second elastomer and/or;
the sealing portion (30, 130) is formed of a third elastomer;
the second elastomer and/or the third elastomer preferably being selected from a group comprising ethylene-propylene-diene rubber and a thermoplastic elastomer, in particular a thermoplastic vulcanisate or a block copolymer of styrene.

8. Profile strand (10, 110) according to any one of claims 1 to 7, **characterised in that** the flock fibres (50) include polyamide fibres, polyethylene fibres, mineral fibres and/or textile fibres.

9. Profile strand (10, 110) according to any one of claims 1 to 8, **characterised in that** the trimming portion (40, 140) has a lacquer coating (47, 147), in particular of a textured lacquer or bonded lacquer.

10. Profile strand (10, 110) according to any one of claims 1 to 9, **characterised in that** the flock fibres (50) have a fibre length of 0.1 mm and 5 mm, the flock fibres (50) preferably having a fibre mass of 0,1 dtex to 30 dtex.

11. Profile strand (10, 110) according to any one of claims 1 to 10, **characterised in that** the first length (L1) has more than70% and in particular more than 90% of the fibre length (L).

12. Method for manufacturing a profile strand (10, 110) according to any one of claims 1 to 11, comprising the steps:
a) extruding or injection molding of a trimming portion (40, 140) having a visible surface (41, 141) of a composite fibre material comprising an elastomer matrix of a first elastomer and flock fibres (50) embedded in the elastomer matrix, such that for producing a textile-like look and feel, the flock fibres (50) each have a fibre length (L) composed of a first length (L1) and a second length (L2), each having a matrix region (51) embedded in the elastomer matrix and an exposition region (52) protruding from the elastomer matrix, the matrix region (51) having the first length (L1) and the exposition region (52) having the second length (L2), and the first length (L1) being greater than the second length (L2);
b) generating an attachment portion (20, 120) and
c) providing the trimming portion (40, 140) with elevations (42) and recesses (43) in order to enhance the visual and haptic surface depth.

13. Method according to claim 12, **characterised in that** the composite fibre material is mixed before or during generation of the trimming portion (40, 140).

14. Method according to claim 12 or 13, **characterised by** the step:
d) generating a sealing portion (30, 130).

15. Method according to any one of claims 12 to 14, **characterised by** the step:
e) providing the trimming portion (40, 140) with elevations (42) such that each elevation (42) has a first vertex (44) and a height (h), and with recesses (43) such that each recess (43) has a second vertex (45), two adjacent elevations (42) having a distance (d).

16. Method according to any one of claims 12 to 15, **characterised by** the step:
f) providing the trimming portion (40, 140) with a lacquer coating (47, 147) which in particular comprises a textured lacquer or bonded lacquer.

17. Method according to any one of claims 12 to 16, **characterised by** performing consecutively without an intermediate step or simultaneously one of the following combinations of steps
I) the steps a) and b)⁻ or
II) the steps a) and c) or
III) the steps b) and c) or
IV) the steps a), b) and c),
wherein preferably the step d) is performed without an intermediate step consecutively to or simultaneously with one of the alternative combinations I) to IV).

## Revendications

1. Élément allongé profilé (10, 110) pour un véhicule automobile (500), comportant:
une portion de fixation (20, 120) ;
une portion de décor (40, 140) qui présente une surface visible (41, 141) qui est pourvue de bossages (42) et de creux (43) pour augmenter la profondeur optique et haptique de la surface ;
dans lequel
la portion de décor (40, 140) est formée par un matériau composite à fibres qui présente une matrice en élastomère constituée d'un premier élastomère et de fibres de flocage (50) noyées dans la matrice en élastomère,
pour générer une optique et une haptique similaires à un textile, les fibres de flocage (50) présentent chacune une longueur de fibre (L) qui est composée d'une première longueur (L1) et d'une seconde longueur (L2), et présentent chacune une zone de matrice (51) noyée dans la matrice en élastomère et une zone d'exposition (52) dépassant de la matrice en élastomère ;
la zone de matrice (51) présente la première longueur (L1) et la zone d'exposition (52) présente la seconde longueur (L2), et
la première longueur (L1) est supérieure à la seconde longueur (L2).

2. Élément allongé profilé (10, 110) selon la revendication 1,
**caractérisé par** une portion d'étanchéité (30, 130).

3. Élément allongé profilé (10, 110) selon la revendication 1 ou 2,
**caractérisé en ce que**
les bossages (42) présentent chacun un premier point formant sommet (44) et une hauteur (h), et les creux (43) présentent chacun un second point formant sommet (45), et deux bossages voisins (42) présentent une distance (d).

4. Élément allongé profilé (10, 110) selon la revendication 3,
**caractérisé en ce que**
la hauteur (h) est comprise entre 100 µm et 500 µm, et de préférence la hauteur (h) est mesurée depuis une ligne de liaison (46) de deux seconds points formant sommets (45) voisins jusqu'au premier point formant sommet (44) situé entre les seconds points formant sommets (45) voisins, orthogonalement à la ligne de liaison (46), et/ou
la distance (d) de deux bossages voisins (45) est comprise entre 500 µm et 1 mm, et la distance (d) est mesurée de préférence depuis le premier point formant sommet (44) de l'un des bossages (42) jusqu'au premier point formant sommet (44) de l'autre bossage (42).

5. Élément allongé profilé (10, 110) selon l'une des revendications 1 à 4,
**caractérisé en ce que**
le premier élastomère est choisi parmi un groupe qui comprend le caoutchouc éthylène-propylène-diène et un élastomère thermoplastique, en particulier un vulcanisat thermoplastique ou un copolymère bloc de styrène.

6. Élément allongé profilé (10, 110) selon l'une des revendications 1 à 5,
**caractérisé en ce que**
le premier élastomère présente une dureté Shore A de 50 ShA à 85 ShA.

7. Élément allongé profilé (10, 110) selon l'une des revendications 2 à 6,
**caractérisé en ce que**
la portion de fixation (20, 120) est formée par un second élastomère et/ou la portion d'étanchéité (30, 130) est formée par un troisième élastomère,
et de préférence le second élastomère et/ou le troisième élastomère sont choisis parmi un groupe comprenant le caoutchouc éthylène-propylène-diène et un élastomère thermoplastique, en particulier un vulcanisat thermoplastique ou un copolymère bloc de styrène.

8. Élément allongé profilé (10, 110) selon l'une des revendications 1 à 7,
**caractérisé en ce que**
les fibres de flocage (50) comprennent des fibres de polyamide, des fibres de polyéthylène, des fibres minérales et/ou des fibres textiles.

9. Élément allongé profilé (10, 110) selon l'une des revendications 1 à 8,
**caractérisé en ce que**
la portion de décor (40, 140) comprend un revêtement de vernis (47, 147), en particulier un vernis structuré ou un vernis lisse.

10. Élément allongé profilé (10, 110) selon l'une des revendications 1 à 9,
**caractérisé en ce que**
les fibres de flocage (50) présentent une longueur de fibres comprise entre 0,1 mm et 5 mm, et les fibres de flocage (50) présentent de préférence un titre de 0,1 dtex à 30 dtex.

11. Élément allongé profilé (10, 110) selon l'une des revendications 1 à 10,
**caractérisé en ce que**
la première longueur (L1) est plus de 70 % et en particulier plus de 90 % de la longueur de fibre (L).

12. Procédé de fabrication d'un élément allongé profilé (10, 110) selon l'une des revendications 1 à 11, comprenant les étapes suivantes consistant à :
a) extruder ou couler par injection une portion de décor (40, 140) qui présente une surface visible (41, 141), à partir d'un matériau composite à fibres qui présente une matrice en élastomère constituée d'un premier élastomère et de fibres de flocage (50) noyées dans la matrice en élastomère, de telle sorte que pour générer une optique et une haptique similaires à un textile, les fibres de flocage (50) présentent chacune une longueur de fibre (L) qui est composée d'une première longueur (L1) et d'une seconde longueur (L2), et présentent chacune une zone de matrice (51) noyée dans la matrice en élastomère et une zone d'exposition (52) dépassant de la matrice en élastomère,
dans lequel la zone de matrice (51) présente la première longueur (L1) et la zone d'exposition (52) présente la seconde longueur (L2), et
la première longueur (L1) est supérieure à la seconde longueur (L2) ;
b) réaliser une portion de fixation (20, 120) et
c) pourvoir la portion de décor (40, 140) de bossages (42) et de creux (43) pour augmenter la profondeur optique et haptique de la surface.

13. Procédé selon la revendication 12,
**caractérisé en ce que** le matériau composite à fibres est mélangé avant ou lors de la réalisation de la portion de décor (40, 140).

14. Procédé selon la revendication 12 ou 13,
**caractérisé par** l'étape consistant à :
d) réaliser une portion d'étanchéité (30, 130).

15. Procédé selon l'une des revendications 12 à 14,
**caractérisé par** l'étape consistant à :
e) pourvoir la portion de décor (40, 140) de bossages (42), de telle sorte que les bossages (42) présentent chacun un premier point formant sommet (44) et une hauteur (h), et de creux (43) de telle sorte que les creux (43) présentent chacun un second point formant sommet (45), et deux bossages voisins (42) présentent une distance (d).

16. Procédé selon l'une des revendications 12 à 15,
**caractérisé par** l'étape consistant à :
f) pourvoir la portion de décor (40, 140) d'un revêtement de vernis (47, 147) qui comprend en particulier un vernis structuré ou un vernis lisse.

17. Procédé selon l'une des revendications 12 à 16,
**caractérisé en ce que** soit
I) les étapes a) et b), soit
II) les étapes a) et c), soit
III) les étapes b) et c), soit
IV) les étapes a), b) et c)
sont mises en oeuvre successivement sans étape intermédiaire ou simultanément les unes avec les autres,
et de préférence l'étape d) est mise en oeuvre sans étape intermédiaire après ou simultanément avec l'une des variantes I) à IV).
